# EUROPÄISCHE PATENTANMELDUNG

(11) **EP 1 065 868 A2**
(43) Veröffentlichungstag der Anmeldung: **03.01.2001**
(21) Anmeldenummer: 00111414.9
(22) Anmeldetag: 26.05.2000
(51) Int. Cl.: H04M 3/42, H04M 3/22, H04M 7/12

(54) **Wartungsverfahren zum Warten einer Vermittlungseinrichtung und für die Ausführung des Verfahrens geeignete Geräte**

(30) Priorität: 30.06.1999 DE 19930147
(71) Anmelder: SIEMENS AKTIENGESELLSCHAFT, 80333 München (DE)
(72) Erfinder: Geck, Bertram, 58239 Schwerte (DE); Neuhaus, Ralf, 44534 Lünen (DE)

(57) **Zusammenfassung**

Erläutert wird unter anderem ein Verfahren zum Warten einer Vermittlungseinrichtung (12). Ein auf einem Wartungsrechner (18) abzuarbeitendes Wartungsprogramm (28a) wird zu Beginn des Wartungsvorgangs von der Vermittlungseinrichtung (12) zum Wartungsrechner (18) übertragen. Daran anschließend werden beim Abarbeiten der Befehle des Wartungsprogramms (28a) im Wartungsrechner (18) Wartungsanforderungen erzeugt, die zur Vermittlungseinrichtung (12) übertragen werden.

## Beschreibung

Die Erfindung betrifft ein Verfahren zum Warten einer Vermittlungseinrichtung, bei dem eine Datenübertragungsverbindung zum Übertragen von Daten zwischen einem Wartungsrechner und einer zu wartenden Vermittlungseinrichtung aufgebaut wird. Beim Abarbeiten der Befehle eines Wartungsprogramms im Wartungsrechner werden Wartungsanforderungen erzeugt, die zur Vermittlungseinrichtung übertragen werden.

Bei einem bekannten Wartungsverfahren ist die Datenübertragungsverbindung beispielsweise eine Modemverbindung, die über das öffentliche Telekommunikationsnetz aufgebaut wird. Ein Wartungstechniker kann mit Hilfe eines Modems von einem Ort aus nacheinander von ihm betreute Vermittlungseinrichtungen an beliebigen Orten warten. Mit zunehmender Entfernung zwischen Wartungsrechner und zu wartender Vermittlungseinrichtung steigen die Gebühren für die Datenübertragungsverbindung.

Die Vermittlungseinrichtung ist beispielsweise eine Telekommunikationsanlage, mit der gebührenfrei Verbindungen im Privatgelände des Betreibers der Telekommunikationsanlage geschaltet werden können. Bei der erstmaligen Inbetriebnahme der Telekommunikationsanlage werden durch den Wartungstechniker Mindesteinstellungen vorgenommen, wie z.B. das Zuweisen von Amtsleitungen und das Vergeben von Rufnummern an die an der Telekommunikationsanlage angeschlossenen Teilnehmer. Ändert sich später beispielsweise die Rufnummer eines Teilnehmers, so muß der Wartungstechniker diese Änderung in der Telekommunkationsanlage ebenfalls vornehmen.

Ein Wartungstechniker hat üblicherweise mehrere Telekommunikationsanlagen aus verschiedenen Baujahren zu betreuen.

Selbst wenn die Telekommunikationsanlagen von einem Hersteller hergestellt worden sind, müssen zum Warten der neueren Telekommunikationsanlagen weiterentwickelte Wartungsprogramme verwendet werden. Der Wartungstechniker muß für jede Bauart ein Wartungsprogramm auf dem Wartungsrechner haben. Dies erhöht den Wartungsaufwand.

Es ist Aufgabe der Erfindung, ein Verfahren zum Warten einer Vermittlungseinrichtung anzugeben, bei dem der Wartungsaufwand im Vergleich zu herkömmlichen Verfahren verringert wird.

Diese Aufgabe wird durch die im Patentanspruch 1 angegebenen Verfahrensschritte gelöst. Weiterbildungen sind in den Unteransprüchen angegeben.

Beim erfindungsgemäßen Verfahren wird nach dem Aufbau der Datenübertragungsverbindung zwischen dem Wartungsrechner und der zu wartenden Vermittlungseinrichtung ein auf dem Wartungsrechner abzuarbeitendes Wartungsprogramm von der Vermittlungseinrichtung zum Wartungsrechner übertragen. Das Wartungsprogramm wird auch stückweise übertragen, um schnell mit der Wartung beginnen zu können und um nur die benötigten Teile zu übertragen. Durch diese Maßnahme wird sichergestellt, daß immer das Wartungsprogramm verwendet wird, das für die gerade zu wartende Vermittlungseinrichtung erstellt worden ist, weil nur dieses Wartungsprogramm von der Vermittlungseinrichtung übertragen werden kann. Beim Ausführen des Wartungsprogramms sind somit Fehlversuche ausgeschlossen, die auf das Verwenden eines falschen Wartungsprogramms zurückzuführen sind. Außerdem muß der Wartungstechniker sich nicht selbst um die Zuordnung der Wartungsprogramm zu den Vermittlungseinrichtungen verschiedener Bauart kümmern.

Durch das erfindungsgemäße Verfahren wird außerdem erreicht, daß vor und nach dem Warten einer Vermittlungseinrichtung auf dem Wartungsrechner kein Wartungsprogramm gespeichert sein muß. Auch muß der Wartungstechniker nicht verschiedene Wartungsprogramme auf Datenspeichern zur Verfügung haben, so daß sich der Wartungsvorgang vereinfacht.

Die oben genannte Aufgabe wird in einem zweiten Aspekt der Erfindung durch ein Verfahren zum Warten einer Vermittlungseinrichtung mit den im Patentanspruch 2 angegebenen Verfahrensschritten gelöst. Weiterentwicklungen sind in den Unteransprüchen angegeben.

Beim Verfahren gemäß dem zweiten Aspekt der Erfindung wird die Datenübertragungsverbindung nicht zwischen dem Wartungsrechner und der Vermittlungseinrichtung sondern zwischen dem Wartungsrechner und einem Diensterbringungsrechner aufgebaut. Das auf dem Wartungsrechner abzuarbeitende Wartungsprogramm wird ganz oder teilweise vom Diensterbringungsrechner zum Wartungsrechner übertragen. Durch diese Maßnahme wird in der Vermittlungseinrichtung kein Speicherplatz zum Speichern des Wartungsprogramms benötigt. Anstatt die Vermittlungseinrichtung auszubauen, wird der Diensterbringungsrechner verwendet.

Beim Verfahren gemäß dem zweiten Aspekt der Erfindung werden beim Abarbeiten der Befehle des Wartungsprogramms im Wartungsrechner Wartungsanforderungen erzeugt, die zum Diensterbringungsrechner übertragen werden. Der Diensterbringungsrechner führt die Wartung der Vermittlungseinrichtung gemäß der Wartungsanforderungen über eine zweite Datenübertragungsverbindung zum Übertragen von Daten zwischen dem Diensterbringungsrechner und der Vermittlungseinrichtung aus. Die zweite Datenübertragungsverbindung muß nicht die Leistungsfähigkeit der ersten Datenübertragungsverbindung haben. Somit kann die Vermittlungsstelle im Vergleich zum Verfahren gemäß dem ersten Aspekt der Erfindung weiter vereinfacht werden.

Bei einer Weiterentwicklung des Verfahrens gemäß dem zweiten Aspekt der Erfindung wird die Verbindung zur Vermittlungsstelle über ein Datennetz aufgebaut, an dem mehrere Vermittlungseinrichtungen angeschlossen werden können. Bei dieser Weiterentwicklung können mit einem einzigen Diensterbringungsrechner alle Telekommunikationsanlagen des Datennetzes gewartet werden. Somit ist es einer Firma möglich, das Verfahren gemäß dem zweiten Aspekt der Erfindung zu nutzen, ohne daß für jede Vermittlungsstelle ein eigener Diensterbringungsrechner erforderlich wäre.

Als Wartungsprogramm werden in Weiterbildungen der erfindungsgemäßen Verfahren sogenannte JAVA-Applett's verwendet. Ein JAVA-Applett ist ein Programm, das in der Programmiersprache JAVA geschrieben wurde. Diese Programmiersprache ermöglicht es, mit vertretbarem Aufwand Anwendungen zu programmieren, bei denen das Wartungsprogramm vor seiner Ausführung über eine Datenübertragungsverbindung übertragen wird.

Bei einer anderen Weiterbildung wird für die Datenkommunikationsverbindung das Internet-Protokoll verwendet. Das Internet-Protokoll IP wird sowohl im Internet als auch in privaten Intranet-Anwendungen verwendet. Wird die Wartung über das Internet durchgeführt, so sind die Kosten für die Verbindung gering, da unabhängig von der Entfernung nur der Ortstarif zur Einwahl in das Internet gezahlt werden muß.

Wird das Wartungsprogramm beim Ausführen eines Leseprogramms zum Lesen von Daten im Internet oder in einem Intranet übertragen, so verringert sich der Wartungsaufwand weiter, weil derartige Leseprogramme auf fast jedem Rechner vorhanden sind. Das Leseprogramm wird englisch auch als "Browser" bezeichnet. Werden JAVA-Appletts verwendet, so kann auf handelsübliche Leseprogramme zurückgegriffen werden, so daß kein eigenes Leseprogramm erstellt werden muß.

Die Erfindung betrifft außerdem einen Vermittlungsrechner und einen Diensterbringungsrechner, mit denen die erfindungsgemäßen Verfahren ausgeführt werden. Somit gelten die oben genannten technischen Wirkungen auch hier.

Im folgenden werden Ausführungsbeispiele der Erfindung an Hand der beiliegenden Zeichnungen erläutert. Darin zeigen:
- Figur 1: eine direkt über das Internet zu wartende Telekommunkationsanlage, und
- Figur 2: eine mit Hilfe eines Diensterbringungsrechners über das Internet zu wartende Telekommunikationsanlage.

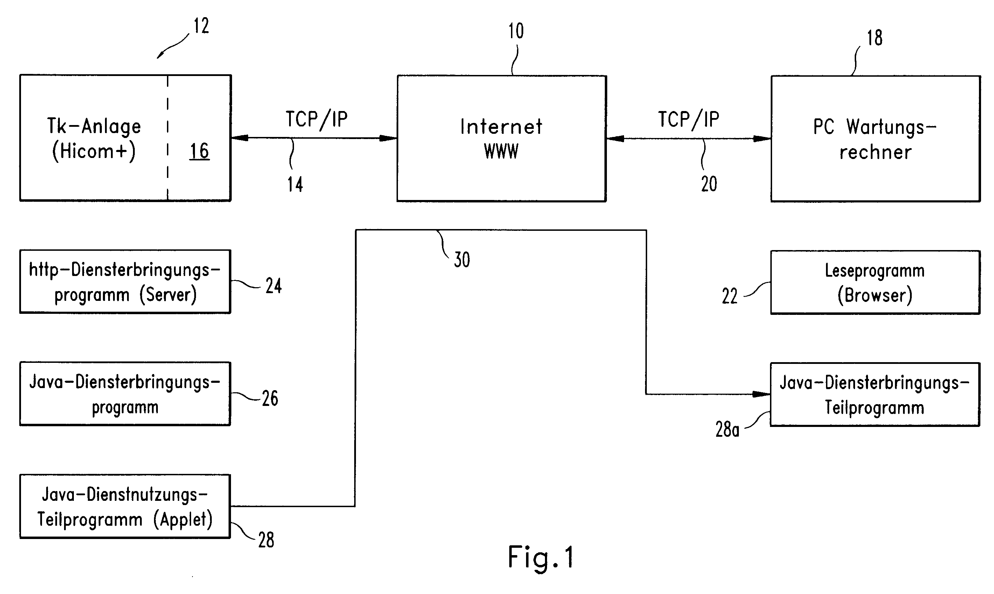

Figur 1 zeigt eine direkt über das Internet 10 zu wartende Telekommunikationsanlage 12. "Internet" ist die Abkürzung für Internationales Netzwerk. Das Internet 10 besteht aus einer Reihe von Teilnetzen, in denen als Netzwerkprotokoll zum Übertragen der Daten einheitlich das Protokoll TCP/IP vewendet wird (Transmission Control Protocol / Internet Protocol). Im Internet 10 können eine Reihe von Diensten genutzt werden, zu denen das weltweite Datennetz WWW gehört. Im weltweiten Datennetz WWW ist das Verfolgen von Querverweisen zwischen verschiedenen Internet-Dokumenten automatisiert. Dies wird durch das Verwenden der Dokumentensprache HTML ermöglicht (Hyper Text Markup Language). Mit der Dokumentensprache HTML lassen sich Dokumente erstellen, die wiederum auf andere Dokumente verweisen. Die mit der Dokumentensprache HTML erstellten Dokumente lassen sich mit Hilfe von Leseprogrammen anzeigen, die englisch als Browser bezeichnet werden.

Die Telekommunikationsanlage 12 ist eine Vermittlungseinrichtung, die von einer Firma für die gebührenfreie Vermittlung von Telefongesprächen in ihrem Privatgelände verwendet wird. Bei der Telekommunikationsanlage 12 handelt es sich um eine weiterentwickelte Telekommunikationsanlage Hicom der Firma SIEMENS. Beispielsweise sind an der Telekommunikationsanlage 12 mehrere Tausend Teilnehmer angeschlossen. Die Telekommunikationsanlage 12 ist über nicht dargestellte Amtsleitungen mit einer Vermittlungsstelle des öffentlichen Telekommunikationsnetzes verbunden, z.B. mit dem Telekommunikationsnetz der Firma TELEKOM. Bei Bedarf wird über das öffentliche Telekommunikationsnetz eine Datenübertragungsverbindung 14 zwischen dem Internet 10 und der Telekommunikationsanlage 12 aufgebaut. Für diesen Zweck enthält die Telekommunikationsanlage eine Interneteinheit 16, die in die Telekommunikationsanlage 12 integriert ist. Im Ausführungsbeispiel wird in der Telekommunikationsanlage 12 derselbe Prozessor zum Vermitteln von Verbindungen zwischen den Teilnehmern und zur Datenübertragung zum oder vom Internet 10 genutzt.

Die Datenübertragungsverbindung 14 wird auf Anforderung eines Wartungstechnikers erstellt, der einen Wartungsrechner 18 nutzt. Für den Zugang zum Internet 10 baut der Wartungstechniker eine Datenübertragungsverbindung 20 zwischen dem Wartungsrechner 18 und dem Internet 10 auf, indem er über das öffentliche Telekommunikationsnetz einen Zugang zum Internet anwählt. Hat der Wartungstechniker die Datenübertragungsverbindung 20 aufgebaut, so wird die Datenübertragungsverbindung 14 geschaltet, wenn der Wartungstechniker über einen Verweis auf einer Dokumentenseite oder durch die Eingabe einer Adresse die Interneteinheit 16 der Telekommunikationsanlage auswählt. Auf den Datenübertragungsverbindungen 14 und 20 werden die Daten gemäß dem Protokoll TCP/IP übertragen.

Im Speicher des Wartungsrechners 18 ist ein Leseprogramm gespeichert, bei dessen Ausführung Dokumente gelesen werden können, die in der Dokumentensprache HTML erstellt worden sind. Zu Beginn des Wartungsvorgangs befindet sich neben dem Betriebssystem nur das Leseprogramm 22 im Speicher des Wartungsrechners 18.

Die Interneteinheit 16 in der Telekommunikationsanlage 12 enthält ein Diensterbringungsprogramm 24, bei dessen Ausführung auf im Speicher der Telekommunikationsanlage 12 gespeicherte Dokumente zugegriffen wird, die in der Dokumentensprache HTML erstellt worden sind. Außerdem lassen sich Kopien dieser Dokumente beim Ausführen des Diensterbringungsprogramms 24 von der Telekommunikationsanlage 12 zu anderen Rechnern übermitteln. Dazu wird ein für HTML-Dokumente entwickeltes Übertragungsprotokoll http verwendet (hyper text transfer protocol).

Die Interneteinheit 16 enthält weiterhin ein Diensterbringungsprogramm 26, bei dessen Ausführung durch einen Prozessor Dienste angeboten werden, wie sie in der Programmiersprache JAVA vorgegeben sind. Dies ermöglicht es, daß Rechner unterschiedlichster Bauart diese Dienste nutzen können. Dies ist darauf zurückzuführen, daß die Programmiersprache JAVA von der Bauart des Rechners unabhängig ist, auf dem das JAVA-Programm ausgeführt wird. Beispielsweise werden JAVA-Programme auf Personalcomputern oder Macintosh Computern eingesetzt.

Die Interneteinheit 16 enthält eine Vielzahl von Dienstnutzungs-Teilprogrammen, von denen in Figur 1 ein Teilprogramm 28 dargestellt ist. die Teilprogramme 28 enthalten Befehle der Programmiersprache JAVA und werden englisch auch als Applet bezeichnet. Beim Ausführen des Diensterbringungsprogramms 26 wird eine Kopie des Teilprogramms 28 über die Datenübertragungsverbindungen 14 und 20 zum Wartungsrechner 18 übertragen, vgl. Pfeil 30. Im Wartungsrechner 18 wird die Kopie des Teilprogramms 28 als Teilprogramm 28a gespeichert. Die Übertragung des Teilprogramms 28 erfolgt unmittelbar nachdem der Wartungstechniker die Verbindung zwischen dem Wartungsrechner 18 und der zu wartenden Telekommunikationsanlage 12 aufgebaut hat. Bei der Ausführung des Teilprogramms 28a auf dem Wartungsrechner 18 wird ein vom Wartungstechniker einzugebendes Kennwort an die Telekommunikationsanlage 12 gesendet. In der Telekommunikationsanlage 12 wird beim Ausführen des Diensterbringungsprogramms 26 geprüft, ob das Kennwort richtig ist. Ist das Kennwort richtig, so werden automatisch Kopien weiterer Teilprogramme zum Wartungsrechner 18 übertragen. Ist dagegen das Kennwort falsch, so wird die Verbindung zwischen Wartungsrechner 18 und Telekommunikationsanlage 12 unterbrochen und eine Wartung ist nicht möglich.

Die weiteren von der Telekommunikationsanlage 12 zum Wartungsrechner 18 übertragenen Kopien von Teilprogrammen werden zur Wartung der Telekommunikationsanlage 12 benötigt. So dient ein zweites Teilprogramm zur Korrektur und Änderung einer Teilnehmerliste, in welcher die an der Telekommunikationsanlage 12 angeschlossenen Teilnehmer verzeichnet sind.

Die Übertragung von Daten von der Telekommunikationsanlage 12 zum Wartungsrechner 18 und in umgekehrter Richtung läßt sich auf einfache Art realisieren, wenn bereits vorhandene Schnittstellen zur Übertragung verwendet werden. Solche Schnittstellen sind CORBA (Common Object Request Broker Architecture), DCOM (Distributed Component Object Model) und die sogenannte JAVA-Nativ-Schnittstelle. Zur Beschreibung der Schnittstellen werden standardisierte Sprachen verwendet, z.B. für die CORBA-Schnittstelle die Sprache IDL (Interface Data Language).

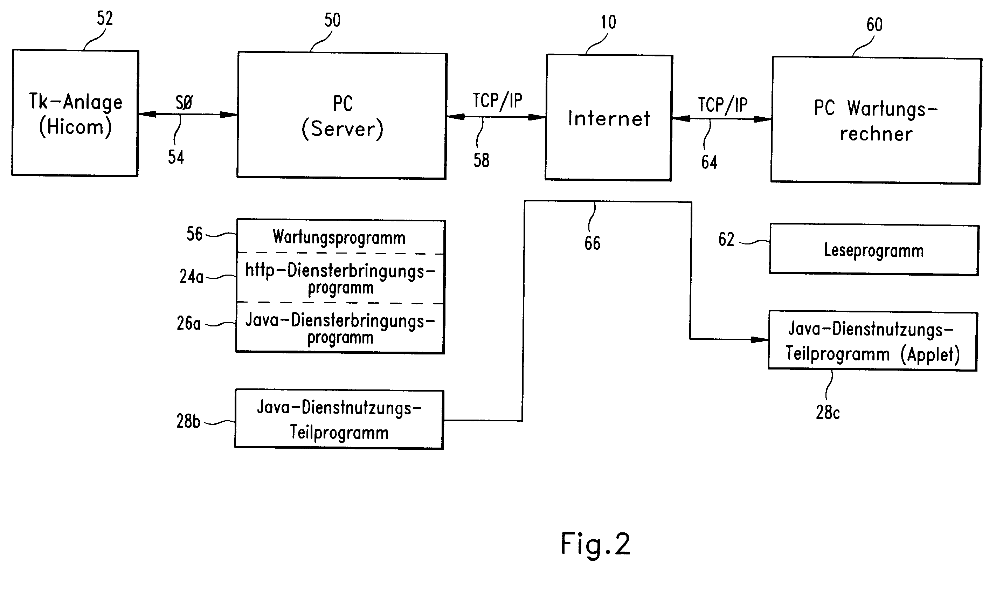

Figur 2 zeigt eine mit Hilfe eines Diensterbringungsrechners 50 über das Internet 10 zu wartende Telekommunikationsanlage 52. Die Telekommunikationsanlage 52 ist beispielsweise eine Telekommunikationsanlage vom Typ Hicom der Firma SIEMENS.

Der Diensterbringungsrechner 50 ist mit der Telekommunikationsanlage 52 über eine S0-Schnittstelle gemäß ISDN-Standard verbunden (Integrated Services Digital Network). Die S0-Schnittstelle ermöglicht eine direkte Datenübertragungsverbindung zwischen dem Diensterbringungsrechner 50 und der Telekommunikationsanlage 52. Die Datenübertragungsverbindung 54 wird über ein kurzes Verbindungskabel mit einer Länge von wenigen Metern realisiert, so daß der Diensterbringungsrechner 50 in unmittelbarer Nähe der Telekommunikationsanlage 52 aufgestellt werden muß.

Im Speicher des Diensterbringungsrechners 50 ist ein Wartungsprogramm 56 gespeichert, mit dessen Hilfe Daten aus der Telekommunikationsanlage ausgelesen und auf einem Bildschirm angezeigt werden können. Außerdem können die Kenndaten der Telekommunikationsanlage 52 mit Hilfe des Wartungsprogramms 56 verändert werden. Ein Diensterbringungsprogramm 24a entspricht dem oben an Hand der Figur 1 erläuterten Diensterbringungsprogramm 24. Mit Hilfe des Diensterbringungsprogramms 24a ist es möglich, über das Internet 10 Kopien von HTML-Dokumente zu übertragen, die im Speicher des Diensterbringungsrechners 50 gespeichert sind.

Ein Diensterbringungsprogramm 26a entspricht im wesentlichen dem an Hand der Figur 1 erläuterten Diensterbringungsprogramm 26. Beim Ausführen des Diensterbringungsprogramms 26a können durch den Diensterbringungsrechner 50 Befehle der Programmiersprache JAVA ausgeführt werden.

Das Wartungsprogramm 56, das Diensterbringungsprogramm 24a und das Diensterbringungsprogramm 26a tauschen beim Ausführen untereinander verschiedene Daten aus. So werden beispielsweise die mit Hilfe des Wartungsprogramms 56 aus der Telekommunikationsanlage 52 ausgelesenen Daten an das Diensterbringungsprogramm 26a übermittelt, welches die Daten dann für einen Abruf über das Internet 10 vorbereitet. Das Diensterbringungsprogramm 24a sendet seinerseits Meldungen an das Diensterbringungsprogramm 26a, wenn ein in einem HTML-Dokument enthaltener JAVA-Dienst ausgewählt wird.

Im Diensterbringungsrechner 50 sind außerdem eine Vielzahl von Dienstnutzungs-Teilprogrammer gespeichert, die für die Fernwartung der Telekommunikationsanlage 52 benötigt werden. Ein in Figur 2 dargestelltes Teilprogramm 28b entspricht im wesentlichen dem an Hand der Figur 1 erläuterten Teilprogramm 28. Die Teilprogramme im Diensterbringungsrechner 50 enthalten Befehle der Programmiersprache JAVA.

Zwischen dem Internet 10 und dem Diensterbringungsrechner 50 wird zur Wartung der Telekommunikationsanlage 52 eine Datenübertragungsverbindung 58 aufgebaut, auf der Daten gemäß dem Protokoll TCP/IP übertragen werden.

Der die Telekommunikationsanlage 52 wartende Wartungstechniker verwendet zur Wartung einen Wartungsrechner 60, der dem an Hand der Figur 1 erläuterten Wartungsrechner 18 entspricht. Im Speicher des Wartungsrechners 60 ist ein Leseprogramm 62 gespeichert, das dem Leseprogramm 22 entspricht, vgl. Figur 1. Um die Telekommunikationsanlage 52 vom Wartungsrechner 60 aus zu warten, baut der Wartungstechniker zuerst eine Datenübertragungsverbindung 64 zum Internet 10 auf.

Anschließend liest der Wartungstechniker mit Hilfe des Leseprogramms 62 ein im Diensterbringungsrechner 50 gespeichertes Startdokument, das in der Dokumentensprache HTML erstellt worden ist. Dabei wird das Diensterbringungsprogramm 24a verwendet. Gleichzeitig wird eine Kopie des in das Startdokument eingebundenen Teilprogramms 28b vom Diensterbringungsrechner 50 über die Datenübertragungsverbindungen 58 und 64 zum Wartungsrechner 60 übertragen und dort im Speicher als Teilprogramm 28c gespeichert, vgl. Pfeil 66. Will der Wartungstechniker mit der Wartung beginnen, so wird mit Hilfe des Leseprogramms 62 das Teilprogramm 28c ausgeführt, um wie an Hand der Figur 1 bereits erläutert, die Berechtigung des Wartungstechnikers zum Warten der Telekommunikationsanlage 52 zu prüfen. Ergibt die Prüfung, daß der Wartungstechniker berechtigt ist, so werden die Kopien weiterer Teilprogramme vom Diensterbringungsrechner 50 zum Wartungsrechner 60 übertragen und dort mit Hilfe des Leseprogramms 62 ausgeführt. Beendet der Wartungstechniker die Wartung der Telekommunikationsanlage 52, so wird die Ausführung des Leseprogramms 62 beendet. Dabei wird der durch die Teilprogramme im Speicher des Wartungsrechners 60 belegte Speicherplatz wieder freigegeben.

## Patentansprüche

1. Verfahren zum Warten einer Vermittlungseinrichtung (12), bei dem eine Datenübertragungsverbindung (14, 20) zum Übertragen von Daten zwischen einem Wartungsrechner (18) und einer zu wartenden Vermittlungseinrichtung (12) aufgebaut wird, ein auf dem Wartungsrechner (18) abzuarbeitendes Wartungsprogramm (28a) von der Vermittlungseinrichtung (12) zum Wartungsrechner (18) übertragen wird,
und bei dem beim Abarbeiten der Befehle des Wartungsprogramms (28a) im Wartungsrechner (18) Wartungsanforderungen erzeugt werden, die zur Vermittlungseinrichtung übertragen werden.

2. Verfahren zum Warten einer Vermittlungseinrichtung (52), bei dem eine erste Datenübertragungsverbindung (58, 64) zum Übertragen von Daten zwischen einem Wartungsrechner (60) und einem Diensterbringungsrechner (50) aufgebaut wird,
ein auf dem Wartungsrechner (60) abzuarbeitendes Wartungsprogramm (28c) vom Diensterbringungsrechner (50) zum Wartungsrechner (60) übertragen wird,
beim Abarbeiten der Befehle des Wartungsprogramms (28c) im Wartungsrechner (60) Wartungsanforderungen erzeugt werden, die zum Diensterbringungsrechner (50) übertragen werden, und bei dem der Diensterbringungsrechner (50) über eine zweite Datenübertragungsverbindung (54) zum Übertragen von Daten zwischen dem Diensterbringungsrechner (50) und der Vermittlungseinrichtung (52) die Wartung der Vermittlungseinrichtung (52) gemäß der Wartungsanforderungen ausführt.

3. Verfahren nach Anspruch 2, **dadurch gekennzeichnet,** daß die Datenübertragungsverbindung (54) zur Vermittlungseinrichtung (52) über ein Datennetz aufgebaut wird, an dem mehrere Vermittlungseinrichtungen angeschlossen sind.

4. Verfahren nach einem der vorhergehenden Ansprüche, **dadurch gekennzeichnet,** daß das Wartungsprogramm (28a, 28c) ein JAVA-Applett ist.

5. Verfahren nach einem der vorhergehenden Ansprüche, **dadurch gekennzeichnet,** daß für die Datenübertragungsverbindung (14, 20; 58, 64) das Internet-Protokoll verwendet wird.

6. Verfahren nach Anspruch 5, **dadurch gekennzeichnet,** , daß das Wartungsprogramm (28c) beim Ausführen eines Leseprogramms (22, 62) zum Lesen von Daten im Internet (10) oder in einem Intranet übertragen und ausgeführt wird.

7. Vermittlungseinrichtung (12),
mit mindestens einem Prozessor zum Ausführen von Befehlen, und mit einem Speicher zum Speichern von Befehlen, bei deren Ausführung:
eine Datenübertragungsverbindung (14, 20) zum Übertragen von Daten zwischen einem Wartungsrechner (18) und der Vermittlungseinrichtung (12) aufgebaut wird,
ein auf dem Wartungsrechner (18) abzuarbeitendes Wartungsprogramm (28a) von der Vermittlungseinrichtung (12) zum Wartungsrechner übertragen wird,
und vom Wartungsrechner (18) über die Datenübertragungsverbindung (14, 20) übertragene Wartungsanforderungen in der Vermittlungsstelle (12) bearbeitet werden.

8. Diensterbringungsrechner (50),
mit mindestens einem Prozessor zum Ausführen von Befehlen, und mit einem Speicher zum Speichern von Befehlen, bei deren Ausführung durch den Prozessor:
eine erste Datenübertragungsverbindung (58, 64) zum Übertragen von Daten zwischen einem Wartungsrechner (60) und dem Diensterbringungsrechner (50) aufgebaut wird,
ein auf dem Wartungsrechner (60) abzuarbeitendes Wartungsprogramm (28c) vom Diensterbringungsrechner (50) zum Wartungsrechner (60) übertragen wird,
vom Wartungsrechner (60) erzeugte Wartungsanforderungen über die Datenübertragungsverbindung (58, 64) zum Diensterbringungsrechner (50) übertragen werden,
und bei deren Ausführung der Diensterbringungsrechner (50) über eine zweite Datenübertragungsverbindung (52) zum Übertragen von Daten zwischen dem Diensterbringungsrechner (50) und der Vermittlungseinrichtung (52) die Wartung einer Vermittlungseinrichtung (52) gemäß der Wartungsanforderungen ausführt.
